# FASCICULE DE BREVET EUROPEEN

(11) **EP 1 150 879 B1**
(45) Date de publication et mention de la délivrance du brevet: **27.11.2002**
(21) Numéro de dépôt: 00900587.7
(22) Date de dépôt: 14.01.2000
(51) Int. Cl.: B62D 65/00

(54) **PROCEDE DE MISE EN CONFORMATION GEOMETRIQUE POUR LA CAISSE DE VEHICULES AUTOMOBILES**
VERFAHREN ZUR GEOMETRISCHEN VERFORMUNG FÜR KRAFTFAHRZEUGKARROSSERIEN
STRUCTURE POSITIONING METHOD FOR MOTOR VEHICLE BODY FRAMES

(30) Priorité: 01.02.1999 FR 9901105
(43) Date de publication de la demande: 07.11.2001
(73) Titulaire: Process Conception Ingenierie S.A., 92190 Meudon (FR)
(72) Inventeur: DENOUAL, Pascal, F-35740 Pace (FR)
(74) Mandataire: Armengaud Ainé, Alain
(86) Numéro de dépôt international: FR0000079
(87) Numéro de publication internationale: WO00046096

(56) Documents cités:
- EP-A- 0 513 453
- DE-A- 3 840 033

## Description

La présente invention est relative à un procédé destiné à l'industrie automobile. Elle vise plus précisément un procédé de conformation de caisses de véhicules automobiles en vue de permettre le pointage, l'assemblage, puis la solidarisation des divers sous-ensembles (soubassement de la caisse, côtés droit et gauche de caisse, traverses avant et arrière, arceau central...) constituant l'ossature métallique de véhicules de type berline deux ou trois corps, break, monospace, coupé, voire d'un véhicule à plateau.

En effet, les différents sous-ensembles, après avoir été élaborés à partir d'une succession d'étapes d'emboutissage, sont réunis entre eux lors de la phase de ferrage de manière à conformer une silhouette de véhicule. Ces pièces sont connectées entre elles par un nombre minimum de points de solidarisation, ce qui permet d'approcher approximativement la géométrie du véhicule. Il convient donc par la suite de figer le plus parfaitement possible dans toutes les directions de l'espace la géométrie du véhicule.

A cette fin, les lignes de production, notamment automobiles, comportent une unité dite de conformation qui réalise tout d'abord une mise en référence géométrique des divers sous-ensembles entre eux (la position des pièces est ajustée par rapport à des repères), puis un ensemble de moyens de solidarisation, dont les coordonnées sont également repérées dans l'espace, assure le bridage des pièces entre elles, et enfin des actionneurs de type robots ou opérateurs figent, notamment par des opérations de soudage par points, la géométrie.

Les unités de conformation connues de l'art antérieur présentent des cadres de conformation latéraux encombrants qui gênent l'approche des robots de soudage autour de la silhouette de véhicule. En effet, ceux-ci forment une "sorte de mur" de chaque côté du véhicule, ce qui rend inaccessible l'accès à l'intérieur de la caisse à d'autres outils.

En outre, dans les machines-outils connues de l'art antérieur, les silhouettes sont acheminées dans l'unité de conformation grâce à un chariot qui dispose de ses propres points d'appui avec la caisse, ce qui engendre la création d'un premier référentiel déterminant la position respective des sous-ensembles par rapport au chariot.

Par ailleurs, ce chariot demeure solidaire de la silhouette du véhicule qu'il transporte durant toutes les opérations de mise en conformation et de solidarisation, ce qui nécessite la prise en compte, par le propre référentiel lié à la machine et par rapport auquel sont déterminées toutes les coordonnées des points de soudure à effectuer sur la caisse, des cotes de la caisse par rapport à son chariot.

Il y a donc présence dans cette unité de mise en conformation de deux référentiels qui vont engendrer des transferts de cotes, d'où un cumul quant aux incertitudes ou aux tolérances de ces cotes, qui peut se traduire par des défauts dans la géométrie finale de la caisse, pouvant entraîner sa mise au rebut, notamment en cas de vrillage.

De plus, ce problème de cumul des intervalles de tolérances liés à la prise en compte de plusieurs référentiels est d'autant plus aigu que l'unité de mise en conformation peut recevoir plusieurs types de géométrie de chariots supports de caisse, chacun ayant son propre référentiel qui est bien entendu différent d'un modèle à l'autre. On parle alors d'un concept de multigéométrie qui s'oppose à un concept de monogéométrie : dans ce cas, le référentiel du chariot et le référentiel de l'unité de conformation sont confondus.

Le document de l'art antérieur EP 0 513 453 A1 dévoile toutefois un procédé de mise en conformation géométrique de caisses de véhicules automobiles au sein d'une unité, consistant en:
- une phase de détection du type de caisse se présentant en amont de ladite unité,
- une phase de sélection de troisièmes moyens de géométrie supérieure grâce à des cinquièmes moyens,
- une phase de fermeture de l'ensemble des actionneurs et positionneurs solidaires des troisièmes moyens de mise en géométrie supérieure par rapport a des zones prédéfinies de la caisse du véhicule,
- une phase de réalisation sur ia caisse de véhicule ainsi géométriquement figée, d'une pluralité de points de soudure,
- une phase d'ouverture de l'ensemble des actionneurs et positionneurs solidaires des troisièmes moyens de mise en géométrie supérieure,
- une phase de manipulation de la géométrie supérieure permettant l'évacuation de la caisse en aval de l'unité, autorisant le départ d'un nouveau cycle de fonctionnement.

La présente invention vise donc à pallier les inconvénients des solutions antérieures, en proposant un procédé de conformation sur une chaîne de fabrication de véhicules automobiles, qui offre des capacités de travail en temps masqué, tout en réalisant une grande modularité de variétés d'assemblages de silhouettes, dans un souci constant d'une recherche de géométrie stable et optimale, tout en permettant une accessibilité maximum du volume de la silhouette en vue de la réalisation d'un nombre maximum de points d'assemblage.

A cet effet, le procédé de mise en conformation géométrique de caisses de véhicules automobiles au sein d'une unité, se caractérise en ce qu'il consiste en :
- une phase de détection du type de caisse se présentant en amont de ladite unité,
- une phase de sélection des premiers et troisièmes moyens de géométrie inférieure et supérieure, grâce à des cinquièmes moyens de sélection ;
- une phase de mise en référence des premiers moyens de géométrie inférieure, grâce à des seconds moyens de mise en référence;
- une phase de mise en position de la caisse du véhicule considéré par rapport aux premiers moyens de mise en géométrie inférieure,
- une phase de manipulation de la géométrie supérieure en vue de la disposer sur des troisièmes moyens de mise en référence de ladite géométrie,
- une phase de fermeture de l'ensemble des actionneurs et positionneurs solidaires des premiers et troisièmes moyens de mise en géométrie inférieure et supérieure par rapport à des zones prédéfinies de la caisse du véhicule,
- une phase de réalisation sur la caisse de véhicule ainsi géométriquement figée, d'une pluralité de points de soudure,
- une phase d'ouverture de l'ensemble des actionneurs et positionneurs solidaires des premiers et troisièmes moyens de mise en géométrie inférieure et supérieure,
- une phase de manipulation de la géométrie supérieure permettant l'évacuation de la caisse en aval de l'unité, autorisant le départ d'un nouveau cycle de fonctionnement.

Avantageusement, la phase de sélection des premiers et troisièmes moyens de géométrie inférieure et supérieure s'effectue de manière synchrone.

Selon une autre caractéristique, la phase de mise en position de la caisse du véhicule par rapport aux premiers moyens de mise en géométrie inférieure s'effectue de manière synchrone avec la première phase de manipulation de la géométrie supérieure.

Selon encore une autre caractéristique de l'invention, le départ du cycle s'effectue soit directement en amont de la phase de mise en référence des premiers moyens de géométrie inférieure, soit en amont de la phase de détection.

Avantageusement, les positionneurs et actionneurs portés par les premiers et troisièmes moyens de mise en géométrie inférieure et supérieure décrivent une coquille par rapport à la caisse du véhicule.

Selon un autre aspect de l'invention, celle-ci vise également une unité de mise en conformation permettant la mise en oeuvre du procédé et comportant notamment un bâti sur lequel coopère, au travers d'un chemin de roulement, un chariot support de caisse de véhicule assurant son arrivée et son départ de l'unité, latéralement à ce chemin de roulement des premiers moyens de mise en géométrie inférieure gauche et droite pouvant circuler sur des seconds chemins de roulement ceinturés par des seconds moyens de mise en référence des premiers moyens de mise en géométrie inférieure, ce bâti comportant en outre des quatrièmes moyens de manipulation d'au moins une silhouette supérieure, disposée au préalable sur des cinquièmes moyens de sélection, vers des troisièmes moyens de mise en référence de ladite silhouette, également solidaire de la structure du bâti.

Selon encore un autre aspect de l'invention, celle-ci vise également des caisses de véhicules présentant une qualité géométrique comprise au sein d'un intervalle de tolérance inférieur au millimètre et préférentiellement compris dans la fourchette 0,1 à 0,5 mm.

D'autres caractéristiques d'une unité de mise en conformation, établie en relation avec l'invention, apparaîtront encore à travers la description qui suit de plusieurs exemples de réalisation, donnés à titre indicatif et non limitatif, en référence aux dessins annexés sur lesquels :
- La Figure 1 est une vue en coupe, en élévation longitudinale, d'une unité de mise en conformation selon l'art antérieur ;
- La Figure 2 est une vue en coupe, en élévation frontale, d'une unité de mise en conformation selon l'art antérieur.
- La Figure 3 est une vue en coupe, en élévation longitudinale, d'une unité de mise en conformation permettant la mise en oeuvre du procédé objet de l'invention.
- La Figure 4 est une vue en coupe, en élévation frontale, d'une unité de mise en conformation permettant la mise en oeuvre du procédé objet de l'invention.
- La Figure 5 est une vue de détail, illustrant le système de verrouillage mécanique entre le barillet et la silhouette supérieure.
- La Figure 6 est une autre vue du système de verrouillage .
- La Figure 7 est une vue de détail des moyens de mise en géométrie inférieure ainsi que des moyens de mise en référence de ceux-ci.

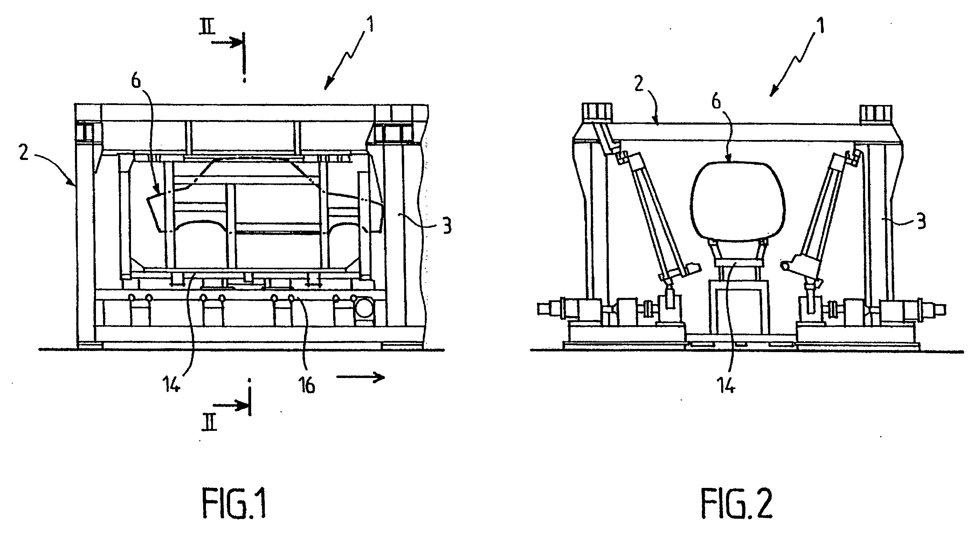

Les Figures 1 et 2 illustrent une unité de mise en conformation selon l'art antérieur. Celle-ci comporte, de chaque côté de la silhouette de caisse que l'on veut assembler, des portiques ou cadres latéraux supportant les moyens d'assemblage et de positionnement devant coopérer au niveau des sous-ensembles formant la caisse. Il apparaît sur ces figures que ces portiques latéraux entravent l'accès et limitent les mouvements des différents robots (non représentés sur ces figures) à l'intérieur de la caisse, ces robots étant positionnés à l'extérieur de ces portiques latéraux.

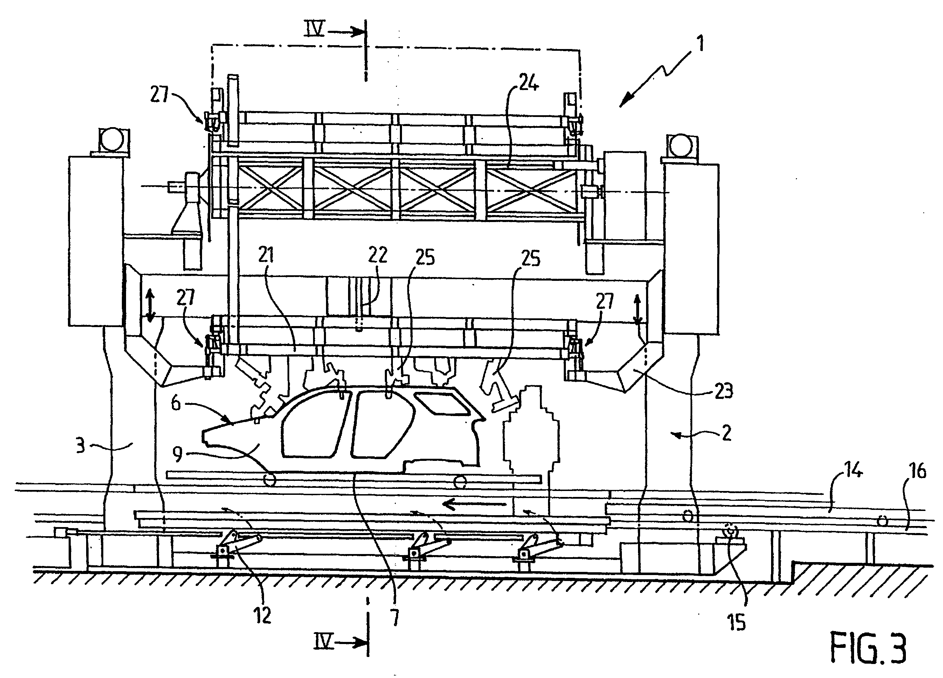

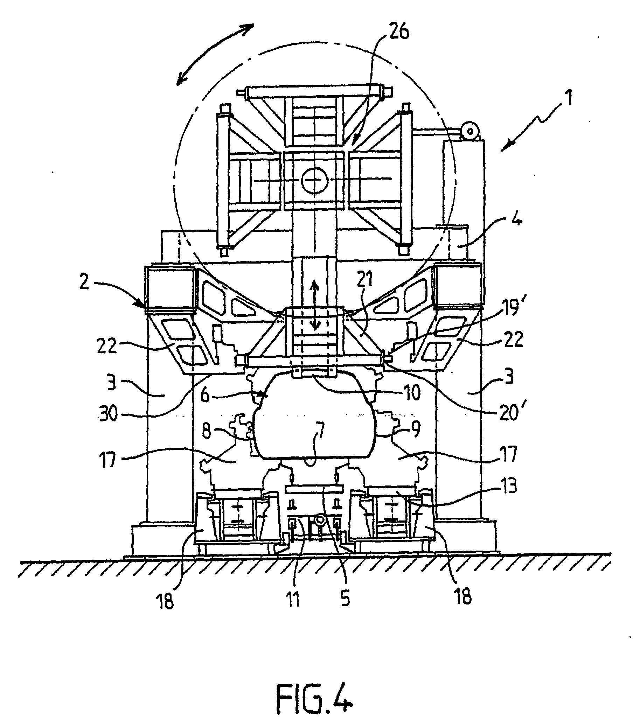

Selon un mode préféré de réalisation d'une unité (cf. Figures 3 et 4) permettant la mise en oeuvre du procédé de conformation de caisses de véhicules automobiles, objet de l'invention, celle-ci comporte une superstructure 1, obtenue par l'assemblage d'une pluralité de poutrelles, de poutres, et de parois métalliques, par des moyens connus (soudage, boulonnage..) afin d'élaborer un bâti 2, ce bâti étant représenté, notamment, sous la forme de quatre montants verticaux 3, placés aux extrémités d'un quadrilatère, reposant sur un massif en béton. Ces montants 3 sont solidarisés par une toiture 4 formée d'autres poutres métalliques mécanosoudées, cet ensemble définissant un volume dans lequel tous les moyens permettant la conformation géométrique du véhicule devront intervenir.

Ces moyens de mise en conformation sont notamment tout d'abord un chariot support 5 d'une caisse de véhicule automobile. Cette caisse 6 comporte particulièrement un soubassement 7 formant plateau, un côté de caisse droit 8 et gauche 9, chacun d'entre-eux pouvant se décomposer en une partie inférieure et une partie supérieure, des traverses 10 avant et arrière, ainsi qu'un arceau central. Ces pièces, venues principalement d'opérations d'emboutissage, sont pré-assemblées de manière à conformer une silhouette dont l'aspect correspond à l'assemblage final, mais dont la géométrie n'est pas encore figée, ces pièces étant assemblées par de simples opérations de pliage de pattes au travers de fentes ; un jeu existe entre les divers éléments qui sera supprimé lorsque la géométrie adéquate aura été figée par l'unité, puis suite à l'exécution d'une pluralité de points de soudure.

Ce chariot support 5 chemine, par des moyens d'entraînement connus (friction, rouleaux, chaînes...), en amont de l'unité de conformation et dispose d'une pluralité d'appuis et de butées, orientés dans les trois directions de l'espace, ainsi que de moyens de bridage, permettant d'acheminer en entrée de l'unité de conformation une caisse 6 de véhicule pré-assemblée, ce chariot se présentant sensiblement selon l'axe longitudinal médian du bâti 2.

A titre d'exemple, ce chariot de transport peut notamment être du type « Cadrac »™, bien connu dans la technique de montage de véhicules.

De plus, ce chariot 5 comporte des moyens pouvant assurer des mouvements de translation verticale du plateau support de caisse 6 par rapport à un chemin de roulement 11 du chariot 5. Dans l'exemple considéré, il s'agit notamment d'un moteur actionnant, par une chaîne cinématique, un jeu de bielles formant un parallélogramme déformable 12.

Par ailleurs, latéralement par rapport au chemin de roulement 11 du chariot 5 de transport, sont disposés de part et d'autre dudit chemin de roulement 11, des premiers moyens de mise en géométrie inférieure 13 des éléments latéraux gauche 8 et droit 9 par rapport au soubassement 7 de la caisse 6 du véhicule automobile.

Ces premiers moyens de mise en géométrie inférieure 13 sont préférentiellement constitués par d'autres chariots 14. Ceux-ci sont munis de moyens de guidage et de transport 15 (notamment des moteurs) par rapport à d'autres chemins de roulement 16 positionnés selon une direction sensiblement parallèle au chemin de roulement 11 dudit chariot 5 support de caisse 6.

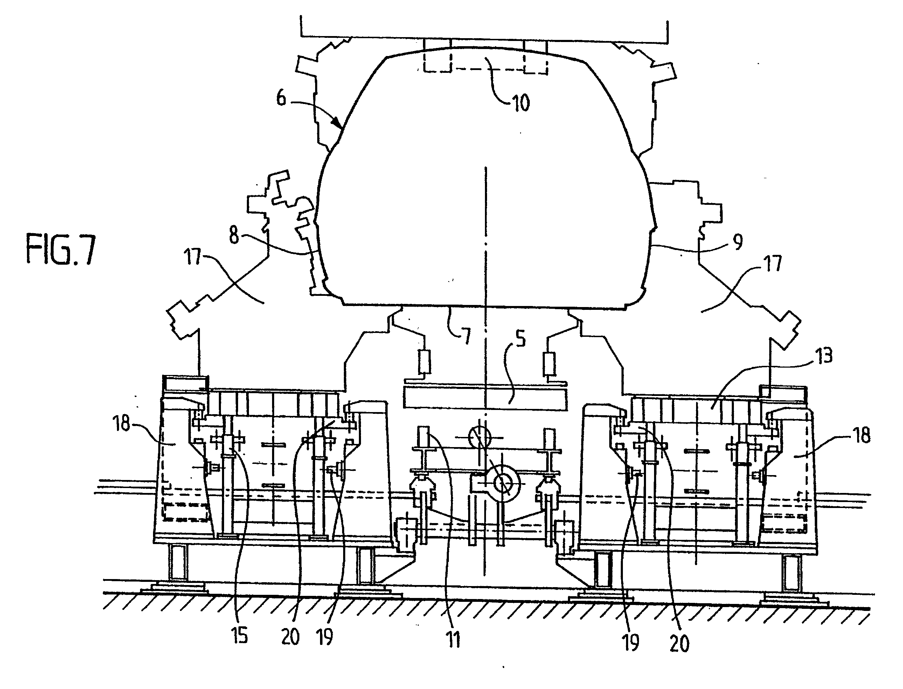

En outre, ces seconds chariots 14 sont pourvus d'une pluralité d'actionneurs de serrage et de desserrage ainsi que de positionneurs (représentés globalement par le repère 17 sur les Figures 4 et 7), destinés, d'une part à coopérer avec des zones particulières de la structure de la caisse 6 du véhicule automobile, et d'autre part à figer la position relative entre les divers sous-ensembles de la carrosserie.

Compte tenu de la modularité du procédé objet de l'invention, celui-ci devant permettre une mise en conformation d'une pluralité de véhicules correspondant soit à des segments de gamme différents, soit à des modèles différents à l'intérieur d'un même segment de gamme, on prévoit de différencier selon au moins deux types, les premiers moyens de mise en géométrie inférieure 13.

Cette différenciation est réalisée en disposant sur les seconds chariots 14 de mise en géométrie inférieure, droits ou gauches, un jeu 17 d'actionneurs et de positionneurs propre à chacune des familles de caisses de véhicules.

Lorsque la différenciation des moyens de mise en géométrie inférieure 13 est effectuée, celle-ci pouvant être réalisée par exemple par une lecture optique d'un code d'identification porté par la caisse 6 du véhicule pré-assemblé en amont de l'unité de mise en conformation ou par tout autre type de moyens d'identification équivalent, les premiers moyens de mise en géométrie inférieure 13, grâce aux moyens de guidage et de transport 15, se positionnent par rapport à des seconds moyens 18 de mise en référence.

Ces seconds moyens 18 de mise en référence sont solidaires du bâti principal 2 de l'unité de mise en conformation. Ils reposent, comme les montants verticaux 3 du bâti 2, sur un massif de béton et appartiennent de ce fait au même référentiel de coordonnées X, Y, Z.

Comme il apparaît sur la Figure 4 et sur la Figure 7, ces seconds moyens 18 de mise en référence ceinturent latéralement les seconds chariots 14 de mise en géométrie inférieure 13 et comportent un jeu 19 de butées disposées selon les trois axes X, Y, Z, réalisées notamment sous la forme de boîtes à galets, dans lesquelles viennent coopérer des parties correspondantes 20 liées aux seconds chariots 14 de mise en géométrie inférieure 13.

Ainsi, lors de la phase de mise en référence des seconds chariots 14 de mise en géométrie inférieure 13, les couples de butées 19 et de positionneurs liés à chacun des seconds chariots 14, sur chacun des axes X, Y, Z sont mis en contact, de manière à rendre dépendantes les positions relatives des actionneurs et des positionneurs portés par chacun des seconds chariots 14 par rapport à l'unique référentiel de coordonnées X, Y, Z de l'unité de mise en conformation. Cette action de mise en contact peut être notamment réalisée par l'action de vérins ou de moteurs qui assurent un mouvement relatif de translation entre les seconds chariots 14 de mise en géométrie inférieure 13 et les seconds moyens 18 de mise en référence.

Les autres moyens de mise en conformation installés sur une unité permettant de mettre oeuvre le procédé objet de l'invention, sont particulièrement positionnés dans les parties supérieures du bâti 2.

Ainsi, on définit globalement, sur les Figures 3 et 4, de manière non limitative, au moins une silhouette supérieure 21, des troisièmes moyens 22 de mise en référence de la silhouette supérieure 21, des quatrièmes moyens de manipulation 23 de ladite silhouette 21, des cinquièmes moyens 24 de sélection de la silhouette 21, le rôle de chacun de ces moyens étant explicité ci-après.

La partie supérieure 4 du bâti 2 de l'unité de mise en conformation 1 comporte des cinquièmes moyens 24 permettant de réaliser la sélection de la silhouette supérieure 21 en fonction du type de caisses de véhicules, et ce dans un souci de modularité optimale du procédé objet de l'invention.

La silhouette supérieure 21 est agencée à la manière d'un plateau sur lequel sont implantés une pluralité d'organes 25 tels que des actionneurs et des positionneurs, permettant de figer la géométrie des autres sous-ensembles du véhicule par rapport au soubassement 7 et aux côtés latéraux gauche 9 et droit 8. Il s'agit notamment des abattants, des traverses 10 et de l'arceau central. Néanmoins, certains de ces sous-ensembles peuvent être amenés à disparaître en fonction du type de caisses de véhicules.

De manière similaire à la mise en géométrie inférieure 13, ces organes 25 viennent coopérer au niveau de zones pré-définies de la caisse 6 du véhicule pour maintenir, selon une géométrie correcte, les divers sous-ensembles formant la carrosserie avant l'opération finale de solidarisation réalisée par des robots de soudage.

Comme on le conçoit aisément, il doit exister autant de types de silhouettes supérieures qu'il existe de types de modèles de caisses de véhicules automobiles (segment de gamme différent, modèle différent dans un même segment de gamme).

En conséquence, on a été amené, dans une première approche, à pourvoir un même type de silhouette supérieure 21 d'un jeu d'organes 25 pouvant s'adapter très facilement par des opérations de paramétrages à plusieurs types de caisses (néanmoins, cette approche n'est possible qu'au sein d'une famille de caisses appartenant à un même segment de gamme), puis, dans une seconde approche, on développe plusieurs types de silhouettes supérieures 21, portant chacune leurs propres organes 25, pour couvrir tous les types de caisses de véhicules.

L'unité de mise en conformation géométrique pour le procédé objet de l'invention étant unique par nature, en raison d'un souci de rentabilité économique et de modularité importante, cette unité comporte des cinquièmes moyens 24 de sélection des silhouettes supérieures 21.

Ces cinquièmes moyens 24 de sélection sont réalisés notamment par un système d'indexage 26, solidaire du bâti 2. Il s'agit notamment d'un barillet s'étendant globalement selon le sens longitudinal de l'unité et portant une pluralité de silhouettes supérieures 21, notamment au nombre de quatre. Ce barillet entraîné en rotation par des moyens connus (moteurs) récupère un code d'identification similaire à celui qui est adressé aux seconds chariots 14 de mise en géométrie inférieure 13, lorsque la caisse 6 du véhicule donné se présente en amont de l'unité de mise en conformation 1 de manière à positionner, grâce à un mouvement de rotation du barillet d'un pas donné, la silhouette supérieure 21 adéquate au-dessus de la caisse du véhicule.

Des quatrièmes moyens 23 de manipulation de la silhouette supérieure 21, placés en partie frontale avant et arrière du bâti 2, saisissent alors la silhouette supérieure 21 et la décrochent des cinquièmes moyens 24 de sélection (par exemple du barillet) en direction des troisièmes moyens 22 de mise en référence de la silhouette supérieure 21.

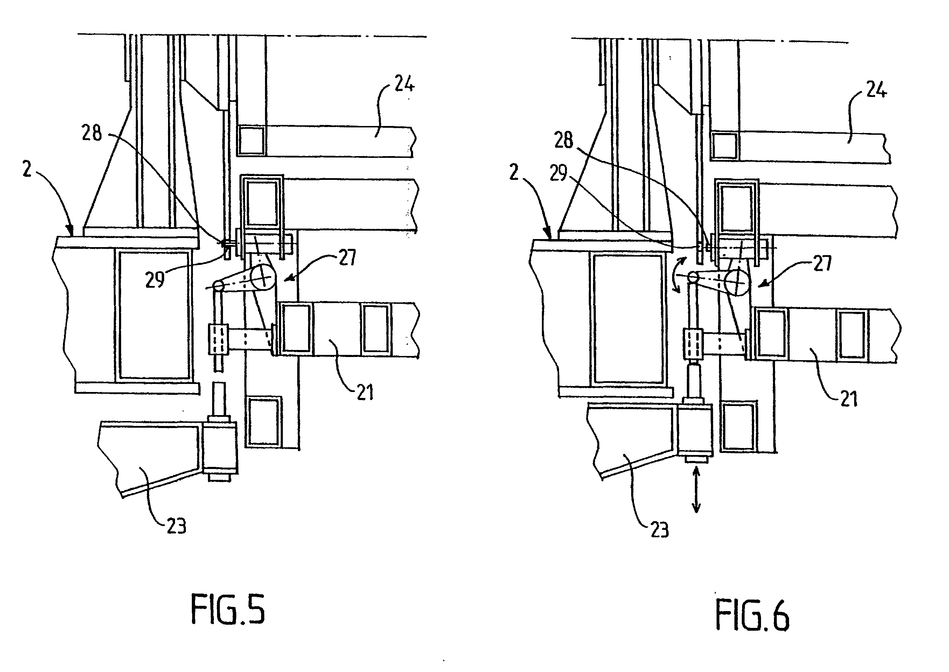

Ces quatrièmes moyens 23 de manipulation sont réalisés, dans l'exemple non limitatif représenté au niveau des Figures 4 et 5, par des bras en forme de pelle. Leur mouvement de translation verticale est assuré par l'intermédiaire d'un cylindre, actionné par un moteur. Ce cylindre est pourvu sur sa périphérie d'une gorge hélicoïdale dans laquelle une pièce formant écrou, qui est solidaire de la pelle, se déplace. Si l'on veut faire varier l'accélération du déplacement de la pelle, on prévoit que le profil de la gorge hélicoïdale n'est pas constant.

On a représenté au niveau de la Figure 5, un détail du système de verrouillage 27 qui interdit tout décrochage de la silhouette supérieure 21 des cinquièmes moyens 24 de sélection, sans une action positive de l'extrémité des quatrièmes moyens 23 de manipulation.

La cinématique du mouvement de verrouillage et/ou de déverrouillage est explicitée au niveau de la Figure 6.

Schématiquement, l'extrémité des quatrièmes moyens 23 de manipulation vient au contact d'une tige qui répercute le mouvement de translation et le transforme en un mouvement de rotation grâce à un levier, qui à son tour transmet, par l'intermédiaire d'un jeu de fourchettes solidaires de ce levier, un mouvement de translation au niveau de doigts de verrouillage 28 qui viennent se libérer ou s'engager dans des cavités 29 réalisées dans les cinquièmes moyens 24 de sélection.

De manière similaire aux seconds chariots 14 de mise en géométrie inférieure, la silhouette supérieure 21 comporte des moyens 20' d'indexation disposés selon un système d'axes X, Y, Z qui viennent coopérer au niveau d'un jeu de butées 19' également agencées selon les trois axes X, Y, Z, ces butées étant réalisées notamment sous la forme de boîtes à galets, prévues sur les troisièmes moyens 22 de mise en référence de la silhouette supérieure 21.

Ces troisièmes moyens 22 de mise en référence de la silhouette supérieure 21 sont référencés sur les Figures 3 et 4, et sont réalisés sous la forme d'au moins quatre éléments de structure 30, solidaires des montants verticaux 3 du bâti 2 et orientés sensiblement selon les diagonales du quadrilatère formé par ces montants.

Les quatrièmes moyens 23 de manipulation déposent la silhouette supérieure 21 qui a été sélectionnée sur l'ensemble des points d'appui et de repérage 19' prévus de part en part sur les troisièmes moyens de mise en référence 22. Etant donné qu'à la fois les quatrièmes moyens 23 de manipulation, la silhouette supérieure 21 et ses organes 25, les troisièmes moyens 22 de mise en référence sont d'une manière directe ou indirecte liés à un système de référentiel d'axes X, Y, Z, appartenant à l'unité de mise en conformation 1, permettant la mise en oeuvre du procédé objet de l'invention, on relie la géométrie des sous-ensembles conformant la partie supérieure de la caisse 6 du véhicule et la géométrie des sous-ensembles formant la partie inférieure de cette même caisse 6 au même référentiel du système d'axes. On rappelle en effet que les seconds moyens de mise en référence 18 de la géométrie inférieure 13 sont repérés dans ce même référentiel d'axes.

Après avoir décrit les principaux moyens prévus sur l'unité de conformation, nous nous attacherons ci-après à décrire le fonctionnement de cette unité.

La première étape consiste en l'acheminement et la présentation dans l'axe longitudinal de l'unité de conformation d'une caisse 6 pré-assemblée de véhicule, celle-ci étant d'un type arbitraire, c'est-à-dire appartenant à un segment de gamme considéré et d'un modèle donné dans ce segment de gamme. Cette caisse 6 est véhiculée et portée par son chariot 5.

S'effectue alors une phase d'identification qui consiste, comme nous l'avons vu précédemment, à détecter le modèle considéré (lecture optique d'un code barres ou de tout autre type de moyens d'identification équivalents).

La connaissance du type de modèle de caisse se présentant en amont de l'unité de conformation 1 permet de réaliser dans des opérations en temps masqué la mise en conformation adéquate de l'unité.

Ainsi, les cinquièmes moyens 24 de sélection de la silhouette supérieure 21 et les premiers moyens de mise en géométrie inférieure 13 se positionnent correctement au regard des divers sous-ensembles inférieurs et supérieurs formant la caisse pré-assemblée, dont le chariot 5 a assuré préalablement l'acheminement dans le volume utile de l'unité de mise en conformation.

Puis, s'effectue la mise en référence des seconds chariots 14 gauche et droit au sein des seconds moyens de mise en référence 18 de la géométrie inférieure 13, par une mise en contact des index 20 portés par les chariots 14 au sein des boîtes à galets 19 présentes sur les premiers moyens 13. Cette opération, dans l'unité représentée au niveau des Figures 3 et 4, est réalisée par un mouvement de translation verticale entre les seconds chariots 14 et les seconds moyens de mise en référence 18 de la géométrie inférieure 13.

A ce stade, les quatrièmes moyens 23 de manipulation se saisissent et décrochent, des cinquièmes moyens 24 de sélection, la silhouette supérieure 21 et réalisent une course de pré-approche de la silhouette supérieure 21 en direction des sous-ensembles formant la partie supérieure de la caisse 6 du véhicule.

Parallèlement et en temps masqué, le chariot 5 supportant la caisse 6 du véhicule dépose, grâce à un mouvement relatif entre le plan horizontal contenant le soubassement 7 de la caisse 6 et le plan horizontal passant par les seconds chariots 14 préalablement mis en référence dans les seconds moyens 18, la caisse de manière à transférer sa géométrie qui était au préalable liée à un référentiel dépendant du chariot 5, à un système de référentiel dépendant de l'unité de conformation.

Les quatrièmes moyens 23 de manipulation terminent la course d'approche de la silhouette supérieure 21 et la présentent dans les troisièmes moyens de mise en référence 22. Le plateau formant la silhouette supérieure 21 est donc déposé et rendu solidaire des éléments de structure 30 appartenant aux troisièmes moyens de mise en référence 22, rendant ainsi dépendant du référentiel X, Y, Z lié à l'unité de mise en conformation, l'ensemble de la géométrie des organes 25 (positionneurs, actionneurs...) portés par ce plateau.

Après cette étape, les organes 17 et 25 supportés par les seconds chariots 14 et la silhouette supérieure 21, sont donc mis en référence dans un même référentiel X, Y, Z qui comporte également la géométrie pré-assemblée du véhicule, celle-ci ayant été au préalable déposée sur les seconds chariots 14.

Il est clair que l'ensemble des cotes définissant la géométrie adéquate du véhicule est bouclé et référencé par rapport à un unique référentiel.

L'ensemble des actionneurs et positionneurs 17 et 25 coopère alors au niveau de zones prédéfinies de la caisse 6 pré-assemblée, aussi bien dans sa partie inférieure que supérieure, en partie frontale avant et arrière et en partie latérale gauche et droite, afin de figer la géométrie de la caisse.

L'étape consistant en la solidarisation de tous les sous-ensembles de la caisse peut alors être effectuée par une pluralité d'opérations de soudure par points, notamment réalisées par une pluralité de robots placés de part et d'autre de l'unité de mise en conformation.

Les actionneurs et positionneurs 17 et 25 se dégagent et se désolidarisent de la caisse du véhicule, autorisant de ce fait un mouvement en sens contraire grâce aux quatrièmes moyens de manipulation 23 de la silhouette supérieure 21, puis de manière synchrone ou asynchrone, un mouvement du chariot 5 par rapport aux premiers moyens de mise en géométrie inférieure 13 et des seconds moyens de mise en référence 18, permettant l'évacuation de la caisse 6 de véhicule ainsi conformée et figée en aval de l'unité de conformation.

Si les moyens de détection du type de caisse enregistrent la présence en amont de l'unité de conformation, d'une caisse identique (au niveau du segment de gamme et du modèle dans ce segment de gamme) à celle qui a été préalablement évacuée en aval de l'unité de conformation, le cycle de fonctionnement se repositionne à la suite de l'étape de mise en référence des premiers moyens de mise en géométrie 13.

Dans le cas contraire, le cycle de fonctionnement se repositionne en amont de la première étape.

L'invention telle que décrite précédemment offre de multiples avantages, car elle améliore la qualité de la géométrie de la caisse, en raison principalement de l'utilisation d'un unique référentiel X, Y, Z pour tous les opérateurs. Elle supprime les cadres latéraux de géométrie droite et gauche (qui étaient présents dans les unités de mise en conformation connus de l'art antérieur), ce qui entraîne de ce fait un meilleur accès pour les points de soudure et donc facilite leur augmentation en nombre et améliore la qualité globale du produit en sortie d'unité de conformation (intervalle de tolérance inférieur au millimètre et préférentiellement compris dans la fourchette 0,1 à 0,5 mm).

De plus, une majorité des opérations est effectuée en temps masqué, tout en s'adaptant à une grande variété de types de caisses, dans un souci de modularité.

Il est à noter également que les actionneurs et positionneurs solidaires de la silhouette supérieure et des moyens de mise en géométrie inférieure sont positionnés de telle façon qu'ils conforment une coquille autour de la caisse du véhicule, ce profil en coquille tranchant radicalement avec les solutions antérieures.

En outre, il est à remarquer que le procédé objet de l'invention et l'unité pour sa mise en oeuvre, sont aussi bien adaptés à des productions de prototype, de pré-série, de petites, moyennes et grande séries, sans aucune modification des moyens de production.

Etant donné que l'unité de mise en conformation pour la mise en oeuvre du procédé objet de l'invention ne comporte pas de portiques latéraux, on a ainsi une plus grande facilité d'accès latéral, par les robots, au niveau de la caisse du véhicule.

## Revendications

1. Procédé de mise en conformation géométrique de caisses (6) de véhicules automobiles au sein d'une unité (1), consistant en :
- une phase de détection du type de caisse se présentant en amont de ladite unité,
- une phase de sélection de premiers et troisièmes moyens de géométrie respectivement inférieure (13) et supérieure (21), et pour les troisièmes moyens grâce à des cinquièmes moyens (24),
- une phase de mise en référence des premiers moyens de géométrie inférieure (13) grâce à des seconds moyens (18),
- une phase de mise en position de la caisse (6) du véhicule considéré par rapport aux premiers moyens de mise en géométrie inférieure (13),
- une phase de manipulation de la géométrie supérieure (21) en vue de la disposer sur des troisièmes moyens (22) de mise en référence de ladite géométrie (21),
- une phase de fermeture de l'ensemble des actionneurs et positionneurs (17, 25) solidaires des premiers et troisièmes moyens de mise en géométrie inférieure (13) et supérieure (21) par rapport à des zones prédéfinies de la caisse (6) du véhicule,
- une phase de réalisation sur la caisse de véhicule ainsi géométriquement figée, d'une pluralité de points de soudure,
- une phase d'ouverture de l'ensemble des actionneurs et positionneurs (17, 25) solidaires des premiers et troisièmes moyens de mise en géométrie inférieure (13) et supérieure (21),
- une phase de manipulation de la géométrie supérieure (21) permettant l'évacuation de la caisse en aval de l'unité (1), autorisant le départ d'un nouveau cycle de fonctionnement.

2. Procédé selon la revendication 1, **caractérisé en ce que** la phase de sélection des premiers et troisièmes moyens de géométrie inférieure (13) et supérieure (21) s'effectue de manière synchrone.

3. Procédé selon la revendication 1, **caractérisé en ce que** la phase de mise en position de la caisse (6) du véhicule par rapport aux premiers moyens de mise en géométrie inférieure (13) s'effectue de manière synchrone avec la première phase de manipulation de la géométrie supérieure (21).

4. Procédé selon l'une quelconque des revendications 1 à 3, **caractérisé en ce que** le départ du cycle s'effectue en amont de la phase de mise en référence (18) des premiers moyens de géométrie inférieure (13).

5. Procédé selon l'une quelconque des revendications 1 à 3, **caractérisé en ce que** le départ du cycle s'effectue en amont de la phase de détection.

6. Procédé selon l'une quelconque des revendications 1 à 5, **caractérisé en ce que** les positionneurs et actionneurs (17, 25) portés par les premiers et troisièmes moyens de mise en géométrie inférieure (13) et supérieure (21) décrivent une coquille par rapport à la caisse (6) du véhicule.

7. Unité de mise en conformation géométrique permettant la mise en oeuvre du procédé selon l'une quelconque des revendications 1 à 6, **caractérisée en ce qu'**elle comporte un bâti (2) sur lequel coopère, au travers d'un chemin de roulement (11), un chariot (5) support de caisse (6) d'un véhicule assurant son arrivée et son départ de l'unité, et latéralement à ce chemin de roulement (11) des premiers moyens de mise en géométrie inférieure (13) gauche et droite pouvant circuler sur des seconds chemins de roulement (15) ceinturés par des seconds moyens (18) de mise en référence des premiers moyens de mise en géométrie inférieure (13), ce bâti (2) comportant en outre des quatrièmes moyens (23) de manipulation d'au moins une silhouette supérieure (21), disposée au préalable sur des cinquièmes moyens (24) de sélection, vers des troisièmes moyens (22) de mise en référence de ladite silhouette (21), ces troisièmes moyens (22) étant également solidaires de la structure du bâti (2).

8. Unité de mise en conformation géométrique selon la revendication 7, **caractérisée en ce que** les extrémités des quatrièmes moyens (23) de manipulation viennent au contact d'un système de verrouillage et/ou déverrouillage (27) qui interdit tout décrochage de la silhouette supérieure (21) des cinquièmes moyens (24) de sélection, sans une action positive de l'extrémité des quatrièmes moyens (23) de manipulation, ce système de verrouillage étant muni d'une tige qui répercute le mouvement de translation et le transforme en un mouvement de rotation grâce à un levier, qui à son tour transmet, par l'intermédiaire d'un jeu de fourchettes solidaires de ce levier, un mouvement de translation au niveau de doigts de verrouillage (28) qui viennent se libérer ou s'engager dans des cavités (29) réalisées dans les cinquièmes moyens (24) de sélection.

9. Caisses (6) de véhicules obtenues par la mise en oeuvre du procédé selon l'une quelconque des revendications 1 à 6, **caractérisées en ce qu'**elles présentent une qualité géométrique comprise au sein d'un intervalle de tolérance inférieur au millimètre et préférentiellement compris dans la fourchette 0,1 à 0,5 mm.

## Patentansprüche

1. Verfahren zur geometrischen Verformung von Karosserien (6) von Kraftfahrzeugen im Bereich einer Einheit (1), bestehend aus:
- einer Phase der Erfassung des Typs der Karosserie, die stromaufwärts vor die Einheit gelangt,
- einer Phase der Auswahl von ersten Vorrichtungen und dritten Vorrichtungen, für die untere Geometrie (13) bzw. obere Geometrie (21) und für die dritten Vorrichtungen mittels fünfter Vorrichtungen (24),
- eine Phase der Referenzherstellung der ersten Vorrichtungen der unteren Geometrie (13) dank zweiter Vorrichtungen (18),
- eine Phase der Positionierung der Karosserie (6) des betrachteten Fahrzeugs bzgl. der ersten Vorrichtungen zur Einstellung der unteren Geometrie (13),
- eine Phase der Manipulation der oberen Geometrie (21), um sie auf den dritten Vorrichtungen (22) zur Referenzherstellung dieser Geometrie (21) anzuordnen,
- eine Phase des Schließens der Gesamtheit der Arbeits- und Positionierungsvorrichtungen (17, 25), die mit den ersten und dritten Vorrichtungen zur Festlegung der unteren Geometrie (13) und oberen Geometrie (21) fest verbunden sind, bezüglich vorbestimmter Zonen der Karosserie (6) des Fahrzeugs,
- eine Phase der Realisierung einer Mehrzahl von Schweißpunkten an der so geometrisch festgelegten Fahrzeugkarosserie,
- eine Phase der Öffnung der Gesamtheit der Arbeits- und Positionierungsvorrichtungen (17, 25), die mit den ersten und dritten Vorrichtungen zur Einstellung der unteren Geometrie (13) und oberen Geometrie (21) fest verbunden sind,
- eine Phase der Manipulation der oberen Geometrie (21), welche die Ausbringung der Karosserie stromabwärts von der Einheit (1) und damit den Start eines neuen Funktionszyklus ermöglicht.

2. Verfahren nach Anspruch 1, **dadurch gekennzeichnet, daß** die Phase der Wahl der ersten und dritten Vorrichtungen der unteren Geometrie (13) und oberen Geometrie (21) synchron erfolgt

3. Verfahren nach Anspruch 1, **dadurch gekennzeichnet, daß** die Phase der Positionierung der Karosserie (6) des Fahrzeugs bezüglich der ersten Vorrichtungen zur Feststellung der unteren Geometrie (13) synchron mit der ersten Phase der Manipulation der oberen Geometrie (21) erfolgt.

4. Verfahren nach einem der Ansprüche 1 bis 3, **dadurch gekennzeichnet, daß** der Start des Zyklus stromaufwärts von der Phase der Referenzherstellung (18) der ersten Vorrichtungen für die untere Geometrie (13) erfolgt

5. Verfahren nach einem der Ansprüche 1 bis 3, **dadurch gekennzeichnet, daß** der Start des Zyklus stromaufwärts von der Erfassungsphase erfolgt

6. Verfahren nach einem der Ansprüche 1 bis 5, **dadurch gekennzeichnet, daß** die Positionierungs- und Arbeitsvorrichtungen (17, 25), die von den ersten und dritten Vorrichtungen zur Herstellung der unteren Geometrie (13) und oberen Geometrie (21) getragen sind, eine Schale bezüglich der Karosserie (6) des Fahrzeugs bilden

7. Einheit zur geometrischen Verformung, welche die Durchführung des Verfahrens nach einem der Ansprüche 1 bis 6 ermöglicht, **dadurch gekennzeichnet, daß** sie aufweist: Ein Gerüst (2), an dem quer zu einer Rollstrecke (11) ein die Karosserie (6) eines Fahrzeugs tragender Transportwagen (5), der dessen Eintritt in die und Austritt aus der Einheit besorgt, und seitlich zu diesem Rollweg (11) erste Vorrichtungen zur Herstellung der unteren Geometrie (13) links und rechts zusammenwirken, die auf zweiten Rollwegen (15) umlaufen können, die von zweiten Vorrichtungen (18) zur Referenzherstellung der ersten Vorrichtungen zur Herstellung der unteren Geometrie (13) umgeben sind, wobei dieses Gerüst (2) außerdem vierte Vorrichtungen (23) zur Manipulation mindestens einer oberen Silhouette (21), die zuvor auf fünften Vorrichtungen (24) zur Auswahl angeordnet wurde, in Richtung auf dritte Vorrichtungen (22) zur Herstellung des Bezugs der Silhouette (21) aufweist, wobei diese dritten Vorrichtungen (22) ebenfalls fest mit der Konstruktion des Gerüsts (2) verbunden sind.

8. Einheit zur geometrischen Verformung nach Anspruch 7, **dadurch gekennzeichnet, daß** das Ende der vierten Vorrichtungen (23) zur Manipulation in Kontakt mit einem Verriegelungs und/oder Entriegelungssystem (27) kommt, das jedes Abhängen der oberen Silhouette (21) von den fünften Vorrichtungen (24) der Auswahl ohne eine positive Aktion des Endes der vierten Vorrichtungen (23) der Manipulation verhindert, wobei dieses Verriegelungssystem mit einer Stange versehen ist, welche die Translationsbewegungen wiedergibt und sie durch einen Hebel in eine Drehbewegung transformiert, wobei der Hebel seinerseits mittels eines Satzes von mit ihm fest verbundenen Gabeln auf der Höhe der Verriegelungsfinger (28) eine Verschiebungsbewegung überträgt, wobei die Verriegelungsfinger in Bohrungen (29) eingreifen oder davon freikommen, die in den fünften Vorrichtungen (24) zur Auswahl ausgebildet sind.

9. Karosserien (6) von Fahrzeugen, die durch die Durchführung des Verfahrens nach einem der Ansprüche 1 bis 6 erhalten wurden, **dadurch gekennzeichnet, daß** sie eine geometrische Qualität aufweisen, die im Bereich eines Toleranzintervalls von weniger als einem mm und vorzugsweise im Bereich von 0,1 bis 0,5 mm liegt.

## Claims

1. Method for the framing of motor vehicle bodies (6) within a workstation (1) consisting of:
- a phase of detecting the type of body appearing upstream of the said workstation,
- a phase of selecting first and third means of lower (13) and upper (21) geometry respectively, and for third means using fifth means (24),
- a phase of referencing the first means of lower geometry (13), using second means (18);
- a phase of positioning the body (6) of the vehicle in question with respect to the first means of setting lower geometry (13),
- a phase of manipulating of the upper geometry (21) for the purpose of disposing it on third means (22) of referencing the said geometry (21),
- a phase of closing the set of actuators and positioners (17, 25) integral with the first and third means of setting lower (13) and upper (21) geometry with respect to predefined areas of the vehicle's body (6),
- a phase of producing a plurality of spot welds on the vehicle body thus geometrically fixed,
- a phase of opening the set of actuators and positioners (17, 25) integral with the first and third means of setting lower (13) and upper (21) geometry,
- a phase of manipulation of the upper geometry (21) allowing the removal of the body downstream of the workstation (1), allowing the start of a new operating cycle.

2. Method according to claim 1, **characterized in that** the phase of selecting the first and third means of lower (13) and upper (21) geometry is carried out synchronously.

3. Method according to claim 1, **characterized in that** the phase of positioning the body (6) of the vehicle with respect to the first means of setting lower geometry (13) is carried out in a synchronous manner with the first phase of manipulation of the upper geometry (21).

4. Method according to any one of claims 1 to 3, **characterized in that** the start of the cycle takes place upstream of the phase of referencing (18) the first means of lower geometry (13).

5. Method according to any one of claims 1 to 3, **characterized in that** the start of the cycle takes place upstream of the detection phase.

6. Method according to any one of claims 1 to 5, **characterized in that** the positioners and actuators (17, 25) carried by the first and third means of setting lower (13) and upper (21) geometry describe a shell with respect to the body (6) of the vehicle.

7. Framing workstation allowing the implementation of the method according to any one of claims 1 to 6, **characterized in that** it comprises a frame (2) upon which cooperates, across a runway (11), a vehicle body (6) support carrier (5) ensuring its arrival at and departure from the workstation, laterally with respect to this runway (11) of the first means of setting left and right lower geometry (13) able to travel on second runways (15) surrounded by second means (18) of referencing the first means of setting lower geometry (13), this frame (2) furthermore comprising fourth means (23) of manipulation of at least one upper profile (21), previously disposed on fifth means (24) of selection, towards third means (22) of referencing the said profile (21), these third means (22) also being integral with the structure of the frame (2).

8. Framing workstation according to claim 7, **characterized in that** the end of the fourth means (23) of manipulation comes into contact with a locking and/or unlocking system (27) which prevents any disengagement of the upper profile (21) from the fifth means (24) of selection without a positive action of the end of the fourth means (23) of manipulation, this locking system being provided with a rod which passes on the translation movement and coverts it into a rotational movement by means of a lever, which in its turn transmits, via a set of forks integral with this lever, a translation movement to locking fingers (28) which exit from or engage in cavities (29) produced in the fifth means (24) of selection.

9. Vehicle bodies (6) obtained by the implementation of the method according to any one of claims 1 to 6, **characterized in that** they have a geometric quality comprised within a tolerance range of less than one millimetre and preferably within the range 0.1 to 0.5 mm.
